# EUROPEAN PATENT APPLICATION

(11) **EP 4 283 724 A1**
(43) Date of publication of application: **29.11.2023**
(21) Application number: 22913807.8
(22) Date of filing: 07.11.2022
(51) Int. Cl.: H01M 4/62

(54) **NEGATIVE ELECTRODE MATERIAL AND PREPARATION METHOD THEREFOR, NEGATIVE ELECTRODE PLATE, BATTERY, AND ELECTRICAL DEVICE**

(30) Priority: 31.12.2021 CN 202111662770
(71) Applicant: BTR NEW MATERIAL GROUP CO., LTD., Shenzhen, Guangdong 518106 (CN)
(72) Inventor: HUANG, Jian, Shenzhen, Guangdong 518106 (CN); HUANG, Jiajun, Shenzhen, Guangdong 518106 (CN); PENG, Han, Shenzhen, Guangdong 518106 (CN); FENG, Xianjie, Shenzhen, Guangdong 518106 (CN); ZHANG, Baoxuan, Shenzhen, Guangdong 518106 (CN); YANG, Shuzhan, Shenzhen, Guangdong 518106 (CN); REN, Jianguo, Shenzhen, Guangdong 518106 (CN)
(74) Representative: Fioravanti, Corrado
(86) International application number: PCT/CN2022/130296
(87) International publication number: WO 2023/124544

(57) **Abstract**

The present disclosure relates to a negative electrode material, a preparation method thereof, a negative electrode plate, a battery, and electrical apparatus, which includes the following steps: performing molding treatment on a powder raw material to obtain a precursor; and continuously feeding the precursor to an inlet of a graphitization apparatus, wherein the precursor is moved from the inlet to a direction close to a high-temperature zone, undergoes preheating treatment and graphitization treatment successively, and then is continuously discharged from an outlet of the graphitization apparatus to obtain the negative electrode material. According to the preparation method of the present disclosure, the shape of the material can be transformed from powder to block and then to powder, and the morphology of the negative electrode material is recovered by pulverizing and recovering after the graphitization treatment, which solves the problem that the traditional vertical graphite furnace cannot process and produce the powder raw materials.

## Description

### Cross-reference to Related Application

The present disclosure claims the priority to the Chinese patent application with the filing No. 2021116627709 filed on December 31, 2021, and entitled "Preparation Method of Negative Electrode Material, and Lithium Ion Battery", the contents of which are incorporated herein by reference in entirety.

### Technical Field

The present disclosure relates to the technical field of negative electrode materials, in particular to a negative electrode material and a preparation method thereof, a negative electrode plate, a battery, and an electrical apparatus.

### Background Art

Graphitization is an important link in the production of negative electrode materials. The existing graphitization process is generally carried out in an intermittent graphite furnace. The intermittent graphite furnace does not move after the materials are put into the furnace, and after heating, graphitization, cooling and other processes, the intermittent graphite furnace is powered off. The graphitization period of the intermittent graphite furnace is long, and the cost is high. At the same time, the dust generated in the operation process and the smoke emission at the high temperature, etc. are likely to cause environmental pollution.

The continuous high-temperature furnace has a short production cycle, which can save the production cost. However, the existing continuous high-temperature furnaces are usually used to produce carbon/graphite products such as carburant with low requirements on carbon content and graphitization degree, which have high requirements on the material state and particle size, and cannot realize the processing of powder. On the other hand, at present, the continuous high-temperature furnaces in the prior art have no correspondingly matched graphite preparation process, which cannot meet the performance requirements of the graphite negative electrode industry. Therefore, there is an urgent need now for a continuous graphitization preparation process that can process powder materials and a negative electrode material with a high graphitization degree.

### Summary

In order to overcome the above defects, the present disclosure provides a negative electrode material and a preparation method thereof, a negative electrode plate, a battery, and an electrical apparatus, and solves the problem that the traditional vertical graphite furnace cannot process and produce powder raw materials.

In a first aspect, the present disclosure provides a preparation method of a negative electrode material, which includes the following steps:
performing molding treatment on a powder raw material to obtain a precursor; and
continuously feeding the precursor to an inlet of a graphitization apparatus, wherein the precursor is moved from the inlet to a direction close to a high-temperature zone, undergoes preheating treatment and graphitization treatment successively, and then is continuously discharged from an outlet of the graphitization apparatus to obtain the negative electrode material.

In combination with the first aspect, the preparation method includes at least one of the following technical features (1) to (8):
(1) the precursor can be pulverized and recovered into powder after the graphitization treatment, and a ratio of a median particle size of the pulverized and recovered powder to a median particle size of the powder raw material is 1 to 4: 1 (1: 1 to 4: 1);
(2) movement mode of the precursor in the graphitization apparatus includes at least one of rotation, rolling, spiral descending, vertical falling and horizontal moving;
(3) movement mode of the precursor in the graphitization apparatus is self-rolling and spiral descending;
(4) heating mode of the graphitization apparatus includes at least one of arc heating, plasma heating and resistance heating;
(5) the graphitization apparatus is of a vertical structure;
(6) the graphitization apparatus further includes a pumping device, and the pumping device is arranged on a furnace cover of the graphitization apparatus and is communicated with inside of the graphitization apparatus;
(7) the graphitization apparatus further includes a pumping device, and a gravity of the precursor is greater than a suction force generated by the pumping device; and
(8) the graphitization apparatus further includes a pumping device, and a frequency of a main fan of the pumping device is 10 Hz to 20 Hz.

In combination with the first aspect, the preparation method includes at least one of the following technical features (1) to (6):
(1) the powder raw material includes coke powder and/or graphite;
(2) the powder raw material includes coke powder, and the coke powder includes at least one of petroleum coke, pitch coke, needle coke, green coke, semi-calcined coke and calcined coke;
(3) the powder raw material includes graphite, and the graphite includes at least one of flake graphite, microcrystalline graphite and spherical graphite;
(4) a median particle size of the powder raw material is 5 µm to 25 µm;
(5) a carbon content of the powder raw material is more than 80%; and
(6) a volatile content of the powder raw material is less than 15%.

In combination with the first aspect, the preparation method includes at least one of the following technical features (1) to (8):
(1) a pressure of the molding treatment is 5 MPa to 100 MPa;
(2) a pressure holding time of the molding treatment is 10 s to 60 s;
(3) an average particle size of the precursor is 5 mm to 100 mm;
(4) a bulk density of the precursor is 0.8 g/cc to 1.2 g/cc;
(5) a mass of a single block of the precursor is 5 g to 100 g;
(6) a powder tap density of the powder raw material is T1, and a powder tap density of the precursor is T2, wherein T1-T2 is less than or equal to 0.03 g/cc; and
(7) an apparatus for the molding treatment includes at least one of a block press, a four-column hydraulic press, a screw extruder, a twin-roll extruder, a pellet extruder and a ball press.

In combination with the first aspect, the method further includes a step of mixing the powder raw material with a binder and a solvent before the molding treatment.

In combination with the first aspect, the preparation method includes at least one of the following technical features (1) to (14):
(1) the binder is converted into at least one of carbon and a graphite substance after the graphitization treatment;
(2) the binder includes at least one of heavy oil, mineral oil, coal tar, asphalt, petroleum resin, phenolic resin, epoxy resin, coumarone resin, potato starch, wheat starch, corn starch, sweet potato starch, kudzu powder and cassava powder;
(3) the solvent can be completely volatilized after the graphitization treatment;
(4) the solvent includes at least one of water, ethanol, acetone, benzene, toluene, quinoline, tetrahydrofuran and carbon tetrachloride;
(5) a mass ratio of the powder raw material, the binder and the solvent is (10 to 100): 1: (5 to 60);
(6) the mixing includes mechanical mixing and/or mechanical fusion;
(7) the mixing includes mechanical mixing, and a rotational speed of the mechanical mixing is 100 r/min to 500 r/min;
(8) the mixing includes mechanical mixing, and time of the mechanical mixing is 10 min to 100 min;
(9) the mixing includes mechanical fusion, and a rotational speed of the mechanical fusion is 200 r/min to 1000 r/min;
(10) the mixing includes mechanical fusion, and time of the mechanical fusion is 10 min to 80 min;
(11) after the molding treatment and before the continuous feeding, a step of drying treatment is further included;
(12) after the molding treatment and before the continuous feeding, a step of drying treatment is further included, and the drying treatment apparatus includes at least one of a tunnel dryer, a drum dryer, a mesh belt dryer and a box dryer;
(13) after the molding treatment and before the continuous feeding, a step of drying treatment is further included, and a temperature of the drying treatment is 100°C to 300°C; and
(14) after the molding treatment and before the continuous feeding, a step of drying treatment is further included, and time of the drying treatment is 4 to 20 h.

In combination with the first aspect, the preparation method further includes a step of performing pre-carbonization treatment on the precursor, and the preparation method includes at least one of the following technical features (1) to (6):
(1) an apparatus for the pre-carbonization treatment includes at least one of a roller kiln, a pushed slab kiln, a mesh belt kiln, a high-sand kiln and a rotary kiln;
(2) a temperature of the pre-carbonization treatment is 700°C to 1500°C;
(3) a time of the pre-carbonization treatment is 10 h to 80 h;
(4) a heat holding time of a highest temperature experienced by the pre-carbonization treatment is more than 1 h;
(5) the pre-carbonization treatment is carried out in a first protective atmosphere for oxidation resistance;
(6) the pre-carbonization treatment is carried out in a first protective atmosphere for oxidation resistance, and the first protective atmosphere includes at least one of nitrogen, argon, neon and xenon.

In combination with the first aspect, the preparation method includes at least one of the following technical features (1) to (5):
(1) the graphitization treatment is carried out in a second protective atmosphere for oxidation resistance;
(2) the graphitization treatment is carried out in a second protective atmosphere for oxidation resistance, and the second protective atmosphere includes at least one of nitrogen, argon, neon and xenon;
(3) a power of the graphitization treatment is greater than or equal to 500 KW;
(4) a heat holding temperature of the graphitization treatment is 2800°C to 3500°C; and
(5) a heat holding time of the graphitization treatment is 2 h to 4 h.

In a second aspect, the present disclosure provides a negative electrode material, which includes graphite, and the negative electrode material has at least one of the following features (1) to (8):
(1) a value of an orientation index (OI) of the negative electrode material is 1.0 to 3.0;
(2) a median particle size of the negative electrode material is 10 µm to 20 µm;
(3) a tap density of the negative electrode material is 0.90 g/cm³ to 1.20 g/cm³;
(4) a specific surface area of the negative electrode material is 0.5 m²/g to 5.0 m²/g;
(5) a specific capacity of the negative electrode material is 330 mAh/g to 370 mAh/g;
(6) a powder compaction density of the negative electrode material is 1.50 g/cm³ to 2.10 g/cm³;
(7) a D10 of the negative electrode material is 5 µm to 10 µm;
(8) a D90 of the negative electrode material is 15 µm to 35 µm.

In a third aspect, the present disclosure provides a negative electrode plate, which includes the negative electrode material prepared by the preparation method described in the first aspect;
or
the negative electrode material according to the second aspect.

In a fourth aspect, the present disclosure provides a battery, which includes the negative electrode material prepared by the preparation method described in the first aspect or the negative electrode material described in the second aspect.

In a fifth aspect, the present disclosure provides an electrical apparatus, which includes the negative electrode material prepared by the preparation method described in the first aspect or the negative electrode material described in the second aspect.

The technical solutions of the present disclosure has at least the following beneficial effects.

In the present disclosure, the powder raw material is molded and then continuously graphitized to obtain the negative electrode material, so that the shape of the material can be changed from powder to block and then to powder. In the present disclosure, the morphology of the negative electrode material is recovered by pulverizing and recovering after the graphitization treatment, which solves the problem that the traditional vertical graphite furnace cannot process and produce the powder raw materials, and greatly reduces the production cycle and cost of the negative electrode material. By adopting continuous graphitization treatment, the temperature and time for all materials to pass through the high-temperature zone are the same, and there is no problem of uneven heating of materials caused by temperature gradient, which can improve the orientation and fast charging performance of negative electrode materials, meet the requirements of products with high graphitization degrees and meet the production requirements of the graphite negative electrode industry.

### Brief Description of Drawings

In order to more clearly illustrate the technical solutions in embodiments of the present disclosure or in the prior art, a brief description of the accompanying drawings which needs to be used in the description of the embodiments or the prior art will be introduced briefly below. Apparently, the accompanying drawings described below are merely some embodiments of the present disclosure, and for those ordinarily skilled in the art, other drawings can be obtained in light of these drawings without creative effort.
FIG. 1 is a flow chart of a preparation method of a negative electrode material of the present disclosure;
FIG. 2 is an SEM image of a negative electrode material provided in Example 1 of the present disclosure; and
FIG. 3 is a first charge-discharge curve of a button battery made of the negative electrode material provided in Example 1 of the present disclosure.

### Detailed Description of Embodiments

In order to better understand the technical solutions of the present disclosure, the embodiments of the present disclosure will be described in detail with reference to the accompanying drawings.

It should be clear that the described embodiments are merely some rather than all embodiments of the present disclosure. Based on the embodiments of the present disclosure, all other embodiment obtained by a person ordinarily skilled in the art without making creative efforts shall fall within the scope of protection of the present disclosure.

In the present disclosure, the description of "and/or", such as "Feature 1 and/or Feature 2", means that it may be "Feature 1" alone, "Feature 2" alone, or "Feature 1" plus "Feature 2".

In addition, the terms "first" and "second" are only intended for descriptive purposes and cannot be understood as indicating or implying relative importance or implicitly indicating the number of indicated technical features. Therefore, the features defined as "first" and "second" may include one or more of these features explicitly or implicitly.

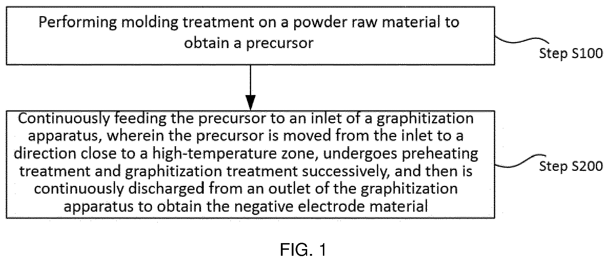

On the one hand, an embodiment of the present disclosure provides a preparation method of a negative electrode material, as shown in FIG. 1, which is a flow chart of a preparation method of a negative electrode material of this embodiment. The method includes the following steps:
S100: performing molding treatment on a powder raw material to obtain a precursor; and
S200: continuously feeding the precursor to an inlet of a graphitization apparatus, wherein the precursor is moved from the inlet to a direction close to a high-temperature zone, undergoes preheating treatment and graphitization treatment successively, and then is continuously discharged from an outlet of the graphitization apparatus to obtain the negative electrode material.

The molding treatment refers to the extrusion molding of the powder raw material, so that a plurality of particles are extruded together to form a block with a particle size and a single mass larger than the powder raw material. In the present disclosure, the block refers to a non-powder morphology formed by the extrusion of the powder raw material, which is for distinguishing the particle size and single mass of powder, but does not limit the shape. The shape of the block may be spherical, ellipsoidal, rod-shaped, flaky and other regular shapes, or other irregular shapes.

In the process of the precursor being moved from the inlet of the graphitization apparatus to the direction close to the high-temperature zone, the precursor undergoes the preheating treatment in the movement stage before reaching the high-temperature zone, and the precursor undergoes the graphitization treatment in the movement stage in the high-temperature zone. After graphitization treatment in the high-temperature zone, the precursor may be pulverized and recovered to a powder morphology.

Continuous feeding refers to continuous feeding in every production cycle, from the beginning of feeding to the end of feeding in the whole process.

Continuous discharge refers to continuous discharge in each production cycle, from the beginning of discharge to the end of discharge in the whole process.

In the process of continuous production in the graphitization apparatus, the inside of the graphitization apparatus is filled with materials, so the materials are continuously fed from the inlet of the graphitization apparatus. At this time, the precursor in the graphitization apparatus continuously is moved from the inlet of the graphitization apparatus in the direction close to the high-temperature zone of the graphitization apparatus, and the materials in the morphology of pulverized and recovered powder after graphitization treatment in the high-temperature zone will be continuously discharged from the outlet of the graphitization apparatus. Under the condition that the blanking speed of continuous feeding is kept constant, in the graphitization apparatus, the material at each moment will repeat the trajectory of the material at the previous moment, so that the temperature and time of graphitization treatment for all precursors fed at different moments are the same.

According to the present disclosure, a precursor is obtained by molding the powder raw material, and then the precursor enters the graphitization apparatus for graphitization and is continuously discharged to obtain a negative electrode material. According to the preparation method of the present disclosure, the shape of the material can be transformed from powder to block and then to powder, and the morphology of the negative electrode material is recovered by pulverizing and recovering after the graphitization treatment, thus solving the problem that the traditional vertical graphite furnace cannot continuously graphitize the powder raw materials. In addition, in the present disclosure, precursors are continuously fed into and discharged from the graphitization apparatus, so that the temperature and time of graphitization treatment of all precursors are the same, and there is no problem of uneven heating of materials caused by temperature gradient, thus greatly reducing the production cycle and cost of negative electrode materials.

The preparation method of the present disclosure is specifically introduced in the following embodiments.

S100: performing molding treatment on a powder raw material to obtain a precursor.

In some implementations, the powder raw material includes coke powder and/or graphite. It can be understood that the powder raw material can be a single coke powder or graphite, or a mixture of coke powder and graphite.

In some implementations, the coke powder includes at least one of petroleum coke, pitch coke, needle coke, green coke, semi-calcined coke and calcined coke.

In some implementations, the graphite includes at least one of flake graphite, microcrystalline graphite and spherical graphite. It can be understood that the graphite may be natural graphite or artificial graphite, and the type of graphite is not limited in the present disclosure.

In some implementations, the median particle size of the powder raw material is 5 µm to 25 µm, specifically, the median particle size may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm and 25 µm, etc., and may of course be any other value within the range above, which is not limited here. Controlling the median particle size of the powder raw material within the above range is beneficial to the subsequent processing and molding. Optionally, the median particle size of the powder raw material is 7 µm to 15 µm.

The median particle size is D50, which denotes a particle size the mass of particles smaller than which accounts for 50% of the total mass of particles on the particle size distribution curve.

In some implementations, the carbon content of the powder raw material is more than 80%, specifically, the carbon content of the powder raw material may be 82%, 85%, 88%, 90%, 93% and 95%, etc., and may of course be any other value within the range above, which is not limited here. Within the scope defined in the present disclosure, higher carbon content of raw materials is beneficial to higher lithium intercalation capacity and cycle stability. Optionally, the carbon content of the powder raw material is more than 90%.

In some implementations, the volatile content of the powder raw material is less than 15%, specifically, the volatile content of the powder raw material may be 5%, 8%, 10% and 13%, etc., and may of course be any other value within the range above, which is not limited here. The volatile content refers to the amount of volatile gas that the powder raw material escapes when heated in the air-isolated state. The volatile gas is generally water, carbon dioxide, etc. In the process of preparing the negative electrode material, the volatile content in the graphite volatilizes when heated, leaving pores in the graphite structure. When encountering severe temperature changes, the loose structure is difficult to withstand such thermal shock and is likely to crack. Therefore, it is necessary to control the volatile content of the powder raw material within the scope defined in the present disclosure.

In some implementations, an apparatus for the molding treatment includes at least one of a block press, a four-column hydraulic press, a screw extruder, a twin-roll extruder, a pellet extruder and a ball press. Optionally, the molding apparatus is a four-column hydraulic press, and the die aperture size of the four-column hydraulic press may be ϕ(10 mm to 500 mm) × (200 mm to 1000 mm), specifically, the aperture size may be ϕ10 mm × 200 mm, ϕ50 mm × 500 mm, ϕ100 mm × 200 mm, ϕ300 mm × 600 mm, ϕ 500 mm × 200 mm, ϕ500 mm ×1000 mm, and is exemplarily ϕ(10 mm to 300 mm) ×(200 mm to 600 mm).

In some implementations, the pressure of the molding process is 5 MPa to 100 MPa, specifically, the pressure of the molding process may be 5 MPa, 10 MPa, 20 MPa, 30 MPa, 40 MPa, 50 MPa, 60 MPa, 70 MPa, 80 MPa, 90 MPa and 100 MPa, etc., and may of course be any other value within the range above, which is not limited here. When the molding pressure is greater than 100 MPa, the bulk density and the strength of the molded particles and blocks are too high, which is not beneficial to the recovery of the morphology of the subsequent molded materials. When the molding pressure is less than 5 MPa, the strength of the particles and blocks is too low, which is not beneficial to the continuous graphitization process. Optionally, the pressure of the molding treatment is 5 MPa to 50 MPa.

In some implementations, the pressure holding time of the molding process is 10s to 60s, specifically, the pressure holding time of the molding process may be 10s, 20s, 30s, 40s, 50s and 60s, etc., and may of course be any other value within the range above, which is not limited here.

In the present disclosure, the pressure and the pressure holding time for molding the powder raw material are controlled within the above range, which is beneficial to continuous graphitization process. At the same time, it is beneficial to the recovery of the morphology of the subsequent molding materials and the formation of the final powder material.

In some implementations, the average particle size of the precursor is 5 mm to 100 mm, specifically, the average particle size may be 5 mm, 10 mm, 15 mm, 20 mm, 30 mm, 40 mm, 50 mm, 60 mm, 70 mm, 80mm, 90 mm and 100 mm, etc., and may of course be any other value within the range above, which is not limited here.

Regarding the average particle size, for an actual particle group composed of particles with different sizes and shapes, compared with an imaginary particle group composed of uniform spherical particles, if their particle sizes have the same overall length, the diameter of the spherical particles is called the average particle size of the actual particle group.

In some implementations, the bulk density of the precursor is 0.8 g/cc to 1.2 g/cc, specifically, the bulk density may be 0.8 g/cc, 0.85 g/cc, 0.9 g/cc, 0.95 g/cc, 1.0 g/cc, 1.05 g/cc, 1.1 g/cc, 1.15 g/cc and 1.2 g/cc, etc., and may of course be any other value within the range above, which is not limited here.

In some implementations, the powder tap density of the powder raw material is T1, and the tap density of the precursor is T2, where T1-T2 is less than or equal to 0.03 g/cc. Specifically, the difference between the tap density of the powder raw material T1 and the tap density of the precursor material T2 may be 0.01 g/cc, 0.02 g/cc and 0.03 g/cc, etc., and may of course be any other value within the range above, which is not limited here. Within the above range, there is little difference between the tap density of the precursor material and the raw material powder, indicating that the precursor after molding treatment has recoverability, that is, the precursor after molding treatment can be recovered into powder after pulverization, and the molding treatment does not damage the powder morphology of the powder raw material.

The method further includes a step of mixing the powder raw material with a binder and a solvent before the molding treatment.

It can be understood that the binder is added before the molding treatment, so that secondary particles are formed between the molded particles through the binder, and the bonding strength between the secondary particles formed after the molding treatment is high and the density is high.

In some implementations, the binder is converted into at least one of carbon and a graphite substance after the graphitization treatment. For example, the binder is basically completely converted after the graphitization treatment, for example, more than 90%, more than 95% or more than 99% of the binder is converted. It can be understood that the binder may be converted at the beginning of the graphitization treatment or in the middle of the graphitization treatment. In addition, the binder may be basically converted completely in the middle of the graphitization treatment, or it may be basically converted completely at the end of the graphitization treatment.

Exemplarily, the binder includes at least one of heavy oil, mineral oil, coal tar, asphalt, petroleum resin, phenolic resin, epoxy resin, coumarone resin, potato starch, wheat starch, corn starch, sweet potato starch, kudzu powder and cassava powder. The binder selected in the present disclosure can be converted into carbon or a graphite substance at the high temperature of the graphitization treatment without polluting the final product.

In some implementations, the solvent can be completely volatilized after the graphitization treatment. It can be understood that the solvent may be volatilized at the beginning of the graphitization treatment or in the middle of the graphitization treatment. In addition, the solvent may be completely volatilized in the middle of the graphitization treatment, or it may be completely volatilized at the end of the graphitization treatment.

Exemplarily, the solvent includes at least one of water, ethanol, acetone, benzene, toluene, quinoline, tetrahydrofuran and carbon tetrachloride. The function of the solvent is mainly to mix the binder and the powder raw material, which is convenient for the subsequent molding treatment. The solvent selected in the present disclosure can be volatilized at the high temperature without causing secondary pollution to the materials.

In some implementations, the mass ratio of the powder raw material, the binder and the solvent is (10 to 100): 1: (5 to 60), specifically, the mass ratios of the powder raw material, the binder and the solvent may be 10: 1: 5, 20: 1: 5, 30: 1: 60, 50: 1: 50, 80: 1: 10 and 100: 1: 5, etc., and may of course be any other value within the range above, which is not limited here. It can be understood that the mass ratio of the powder raw material, the binder and the solvent is controlled within the above range, which is beneficial to the subsequent molding treatment. Optionally, the mass ratio of the powder raw material, the binder and the solvent is (10 to 50): 1: (5 to 30).

In some implementations, the way of mixing includes mechanical mixing and/or mechanical fusion.

The mechanical mixing means that the materials are dispersed but not fused together, and the mechanical fusion means that materials are fused together.

In some implementations, the apparatus for the mechanical mixing may be a VC mixer, a horizontal ribbon mixer, a three-dimensional mixer, a conical mixer, etc., and is exemplarily a horizontal ribbon mixer. The apparatus for the mechanical fusion may be a mechanical fusion machine, a heating fusion machine, etc.

In some implementations, the rotational speed of the mechanical mixing is 100 r/min to 500 r/min, specifically, the rotational speed may be 100 r/min, 150 r/min, 200 r/min, 250 r/min, 300 r/min, 350 r/min, 400 r/min, 450 r/min and 500 r/min, etc., and may of course be any other value within the range above, which is not limited here. Optionally, the rotational speed of the mechanical mixing is 200 r/min.

In some implementations, the time of the mechanical mixing is 10 min to 100 min, specifically, the time of the mechanical mixing may be 10 min, 20 min, 30 min, 40 min, 50 min, 60 min, 70 min, 80 min, 90 min and 100 min, etc., and may of course be any other value within the range above, which is not limited here. Optionally, the time of the mechanical mixing is 30 min.

In some implementations, the rotational speed of the mechanical fusion is 200 r/min to 1000 r/min, specifically, the rotational speeds may be 200 r/min, 300 r/min, 400 r/min, 500 r/min, 600 r/min, 700 r/min, 800 r/min, 900 r/min and 1000 r/min, etc., and may of course be any other value within the range above, which is not limited here. Optionally, the rotational speed of the mechanical mixing is 500 r/min.

In some implementations, the time of the mechanical fusion is 10 min to 80 min, specifically, the time of the mechanical fusion may be 10 min, 20 min, 30 min, 40 min, 50 min, 60 min, 70 min and 80 min, etc., and may of course be any other value within the range above, which is not limited here. Optionally, the time of the mechanical fusion is 20 min.

The coke raw materials and/or graphite are coated with binder, and the binder is dispersed more evenly by mechanical mixing and/or mechanical fusion process, thus achieving the desired molding effect.

In some implementations, after the molding treatment and before the precursor is continuously fed into the graphitization apparatus, a step of drying treatment is further included. The purpose of drying is to volatilize the solvent and avoid polluting the material.

in some implementations, the apparatus used in the drying process includes at least one of a tunnel dryer, a drum dryer, a mesh belt dryer and a box dryer, and is exemplarily a tunnel dryer.

In some implementations, a temperature of the drying is 100°C to 300°C, specifically, the temperature may be 100°C, 120°C, 170°C, 200°C, 230°C, 250°C, 280°C and 300°C, etc., and may of course be any other value within the range above, which is not limited here. Optionally, the temperature of the drying treatment is 100°C to 200°C.

In some implementations, the time of the drying treatment is 4 h to 20 h, specifically, the time of the drying treatment may be 4 h, 5 h, 6 h, 7 h, 8 h, 9 h, 10 h, 11 h, 12 h, 13 h, 14 h, 15 h, 16 h, 17 h, 18 h, 19 h and 20 h, etc., and may of course be any other value within the range above, which is not limited here. Optionally, the time of the drying treatment is 4 h to 10 h.

In the preparation method provided by the present disclosure, a material with a high strength and a high density is obtained by molding the powder raw material, and powder molding is realized by mixing the powder raw material and the binder. The material coated in the liquid phase by adding a solvent has good coating uniformity, high particle composite degree and excellent orientation after granulation.

Step S200: continuously feeding the precursor to an inlet of a graphitization apparatus, wherein the precursor is moved from the inlet to a direction close to a high-temperature zone, undergoes preheating treatment and graphitization treatment successively, and then is continuously discharged from an outlet of the graphitization apparatus to obtain the negative electrode material.

In some implementations, before the precursor obtained in step S100 is continuously fed into the inlet of the graphitization apparatus, the method further includes a step of performing pre-carbonization treatment on the precursor, and the pre-carbonization is exemplarily after drying the precursor. The pre-carbonization treatment can remove volatile contents from the precursor, which can reduce the pressure on the graphitization apparatus in subsequent production. When the powder raw material is mixed with the binder, the binder can form a bridge between the precursor particles after pre-carbonization, so as to achieve the function of secondary granulation, which replaces the traditional process of secondary granulation of graphite negative electrode by using a mixed heating kettle.

In some implementations, an apparatus for the pre-carbonization treatment includes at least one of a roller kiln, a pushed slab kiln, a mesh belt kiln, a high-sand kiln and a rotary kiln.

In some implementations, the temperature of the pre-carbonization treatment is 700°C to 1500°C, specifically, the temperature of the pre-carbonization treatment may be 700°C, 800°C, 900°C, 1000°C, 1100°C, 1200°C, 1300°C, 1400°C and 1500°C, etc., and may of course be any other value within the range above, which is not limited here. Optionally, the time of the pre-carbonization treatment is 900°C to 1300°C.

In some implementations, the time of the pre-carbonization treatment is 10 h to 80 h, specifically, the time is 10 h, 20 h, 30 h, 40 h, 50 h, 60 h, 70 h and 80 h, etc., and may of course be any other value within the range above, which is not limited here. Optionally, the time of the pre-carbonization treatment is 20 h to 50 h.

In some implementations, a heat holding time of a highest temperature experienced by the pre-carbonization treatment is more than 1 h, specifically, the holding time of the highest temperature experienced by the pre-carbonization treatment may be 1.5 h, 2 h, 3 h and 4 h, etc., and may of course be any other value within the range above, which is not limited here. Optionally, the heat holding time of the highest temperature experienced by the pre-carbonization treatment is longer than 2 h. It can be understood that the highest temperature experienced by the pre-carbonization treatment may be any value among the temperatures of the pre-carbonization treatment (that is, any value between 700°C and 1500°C), and the temperature during the pre-carbonization treatment may fluctuate or remain unchanged. Under the condition that the temperature remains unchanged, the highest temperature experienced by the pre-carbonization treatment is the temperature maintained during the reaction. During the pre-carbonization treatment, the temperature is mostly maintained at the highest carbonization temperature experienced, which is beneficial to the removal of volatile impurities in the precursor, thus is beneficial to the subsequent graphitization and the reduction of the pollution of the finally prepared negative electrode material.

In some implementations, the pre-carbonization treatment is carried out in a first protective atmosphere for oxidation resistance. For example, the first protective atmosphere includes at least one of nitrogen, argon, neon and xenon.

In some implementations, the holding temperature of the graphitization treatment is 2800°C to 3500°C, specifically, the temperature may be 2800°C, 2900°C, 3000°C, 3100°C, 3200°C, 3300°C, 3400°C, 3500°C, etc., and may of course be any other value within the range above, which is not limited here. Controlling the graphitization temperature within the above range is beneficial to the graphitization of the material and improvement of the particle morphology and tap density of the finally prepared negative electrode material, and is beneficial to subsequent processing. The temperature of continuous graphitization treatment below 2800°C is not beneficial to the discharge of impurity trace elements, while the temperature of the graphitization treatment above 3500°C leads to the gasification of carbon/graphite materials. Optionally, the temperature of the graphitization treatment is 3000°C to 3500°C.

In some implementations, the graphitization apparatus is of a vertical structure.

In some implementations, the movement mode of the precursor in the graphitization apparatus includes at least one of rotation, rolling, spiral descending, vertical falling and horizontal moving. Since the precursor is a block or granular substance after molding, and undergoes at least one of the movement states of rotation, rolling, spiral descending, vertical falling and horizontal moving at the inlet of the graphitization apparatus to reach the designated position in the furnace, the precursor of the present disclosure can be fed smoothly and efficiently in the graphitization apparatus.

In some implementations, the movement mode of the precursor in the graphitization apparatus is self-rolling and spiral descending.

In some implementations, the heating mode of the graphitization apparatus includes at least one of arc heating, plasma heating and resistance heating. Optionally, the arc heating mode is adopted, and an arc is generated between the positive electrode and the negative electrode in the graphite furnace to form a high-temperature thermal field, thus ensuring the necessary temperature condition for graphitization of the negative electrode.

In some implementations, the graphitization apparatus further includes a pumping device, and the pumping device is arranged on a furnace cover of the graphitization apparatus and is communicated with inside of the graphitization apparatus, or is arranged around the furnace cover and communicated with the inside of the graphitization apparatus. For example, the gas in the graphitization apparatus is pumped out by the pumping device and treated by the desulfurization device, which solves the problem of environmental pollution caused by the gas discharge of the traditional open graphitization apparatus. Arrangement of the pumping device close to the furnace cover has at least the following advantages: firstly, the pumping device is located higher than the graphitization apparatus, which is beneficial to air extraction; besides, the pumping device is kept away from the high-temperature zone, so as to prevent the pumping device from affecting the temperature of the high-temperature zone; in addition, the pumping device is kept away from the reaction materials, so as to avoid pumping away the powder material and affecting the yield.

In some implementations, the gravity of the precursor is greater than the suction force generated by the pumping device, the mass of a single precursor is maintained at 5 g-100 g, and the fan frequency of the pumping device is 10 Hz to 20 Hz, so that the precursor will not be pumped away due to excessive air volume within the above fan frequency range.

In some implementations, the temperature of the inlet cover of the graphitization apparatus is 500°C to 1600°C, and the temperature of the inlet cover of the graphitization apparatus may be, for example, 500°C, 600°C, 700°C, 800°C, 900°C, 1000°C, 1100°C, 1200°C, 1300°C, 1400°C, 1500°C, 1600°C, etc. In the above temperature range, it is beneficial to control the heat balance in the graphitization apparatus.

In some implementations, the time of continuous production treatment in the graphitization apparatus is 8 h to 50 h, specifically, the continuous production time in the graphitization apparatus may be 8 h, 9 h, 10 h, 15 h, 20 h, 30 h, 40 h and 50 h, etc., and may of course be any other value within the range above, which is not limited here. Optionally, the time of continuous production treatment in the graphitization apparatus is 8 h to 20 h.

Specifically, the continuous production treatment in the graphitization apparatus includes a heating stage, a temperature holding stage and a cooling stage. The heating stage refers to the preheating treatment, the temperature holding stage refers to the graphitization treatment, and the cooling stage refers to a cooling process after the recovered powder leaves the high-temperature zone. The following is an example:
heating stage: heating the precursor to 2800°C to 3500°C within 3 h to 6 h;
temperature holding stage: keeping the temperature at 2800°C to 3500°C for 2 h to 4 h;
cooling stage: cooling to 100°C to 200°C within 3 h to 6 h after temperature holding.

In some implementations, the apparatus of the graphitization treatment is a continuous graphitization furnace.

In some implementations, the graphitization treatment is carried out in a second protective atmosphere for oxidation resistance.

In some implementations, the second protective atmosphere includes at least one of nitrogen, argon, neon and xenon.

In some implementations, the power of the graphitization treatment is greater than or equal to 500 KW, specifically, the power may be 500 KW, 600 KW, 700 KW, 800 KW, 900 KW, 1000 KW and 1100 KW, etc., and may of course be any other value within the range above, which is not limited here. Optionally, the power of the graphitization treatment is greater than or equal to 800 KW.

In some implementations, the discharging rate of the graphitization treatment is 1 kg/min to 20 kg/min, specifically, the discharging rate may be 1 kg/min, 2 kg/min, 3 kg/min, 4 kg/min, 5 kg/min, 6 kg/min, 7 kg/min, 8 kg/min, 9 kg/min, 10 kg/min, 12 kg/min, 15 kg/min, 18 kg/min and 20 kg/min, etc., and may of course be any other value within the range above, which is not limited here. Optionally, the discharging rate of the graphitization treatment is 1 kg/min to 10 kg/min. Controlling the discharging rate within the above range is beneficial to the stability of the graphitization process.

In some implementations, after the graphitization treatment, cooling treatment is performed. The cooling treatment adopts multi-stage water and circulating water to cool the materials quickly to near the room temperature during the cooling process, so as to ensure the continuous and stable operation of the furnace at the high temperature.

It can be understood that if the temperature, the power and the discharging rate of the graphitization treatment are controlled within the above range, the time of the graphitization treatment of the present disclosure is far shorter than the time of the existing graphitization treatment, and the temperature and time of all materials passing through the high-temperature zone for the graphitization treatment are the same, so there is no problem of uneven heating or temperature gradient. Thus, the capacity of the negative electrode material and the powder compaction density can be improved, and the material consistency is good.

In some implementations, after graphitization treatment, a step of pulverizing the obtained materials is further included. The apparatus for pulverization includes at least one of an air jet pulverizer, a mechanical pulverizer and a grinder, and optionally, the mechanical pulverizer is used for pulverization. Specifically, the mechanical pulverizer includes at least one of a tooth pulverizer, a hammer pulverizer, a turbine pulverizer, a press-grind pulverizer, a knife pulverizer and a milling pulverizer.

In some implementations, the median particle size of the powder raw material is 5 µm to 25 µm, and the median particle size of the negative electrode material obtained by pulverization and graphitization is 10 µm to 20 µm. It can be understood that in the preparation method of the present disclosure, the particle size range of the precursor is recovered to the particle size range of the powder raw material after graphitization and pulverization. For example, the precursor may be pulverized and recovered to powder after the graphitization treatment. Moreover, the ratio of the median particle size of the pulverized and recovered powder to the median particle size of the powder raw material is (1 to 4): 1, specifically, the ratios may be 1: 1, 2: 1, 3: 1 and 4: 1, etc., and may of course be any other value within the range above, which is not limited here.

According to the preparation method of the negative electrode material of the present disclosure, the powder raw material are molded to obtain a precursor, and the tap density difference between the precursor material and the raw material powder is not large, which indicates that the precursor after molding treatment has recoverability, that is, the precursor after molding treatment can be recovered into powder after graphitization treatment and pulverization in the ways as listed above, and the molding treatment does not damage the powder morphology of the powder raw material. The negative electrode material obtained by continuous graphitization treatment of the above precursor has a good particle morphology, a high tap density and low cost, which can meet the requirements of high-end power or 3C products.

In a second aspect, an embodiment of the present disclosure provides a negative electrode material, which includes graphite, and can be prepared by the preparation method of the negative electrode material provided in the above embodiments.

In some implementations, the value of I₀₀₄/I₁₁₀ of the negative electrode material is 1.0 to 3.0. Specifically, the area ratio of the negative electrode material is obtained by integrating XRD diffraction peaks, where I₀₀₄ refers to the diffraction peak intensity of the (004) crystal facet of the negative electrode material, I₁₁₀ refers to the diffraction peak intensity of the (110) crystal facet of the negative electrode material, and the value of I₀₀₄/I₁₁₀ is the orientation index (OI) value of the graphite negative electrode material. Specifically, the OI value of the negative electrode material may be 1.0, 1.2, 1.8, 2.0, 2.5, 3.0, etc., and may of course be any other value within the range above, which is not limited here. By molding the powder raw material, secondary particles are obtained under the combined action of molding pressure and binder, so that the OI value of the prepared negative electrode material is 1.0 to 3.0, which indicates that the material has good isotropic properties, and lithium ions can be embedded between graphite layers from all directions during fast charging, which is beneficial to the fast charging of the lithium ion battery.

In some implementations, the negative electrode material mainly includes secondary particles, and the secondary particles include a plurality of primary particles. It can be understood that "primary particles" in the present disclosure refer to particles that exist alone without forming aggregates. "Secondary particles" refer to particles formed by the aggregation or bonding of the above primary particles.

In some implementations, the median particle size of the negative electrode material is 10 µm to 20 µm, specifically, the median particle size may be 10 µm, 11 µm,12 µm,13 µm, 14 µm, 15 µm, 16 µm, 17 µm,18 µm, 19 µm and 20 µm, etc., and may of course be any other value within the range above, which is not limited here. Optionally, the median particle size of the negative electrode material is 12 µm to 18 µm, and controlling the median particle size of the negative electrode material within the above range is beneficial to improving the cycle performance of the negative electrode material.

In some implementations, the D10 of the negative electrode material is 5 µm to 10 µm, specifically, the D10 may be 5 µm, 6 µm, 7 µm, 8 µm, 9 µm and 10 µm, etc., and may of course be any other value within the range above, which is not limited here.

The D10 denotes a particle size the mass of particles smaller than which accounts for 10% of the total mass of particles on the particle size distribution curve.

In some implementations, the D90 of the negative electrode material is 15 µm to 35 µm, and specifically, the D90 may be 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm,32 µm, 33 µm, 34 µm and 35 µm, etc., and may of course be any other value within the range above, which is not limited here.

The D90 denotes a particle size the mass of particles smaller than which accounts for 90% of the total mass of particles on the particle size distribution curve.

In some implementations, the tap density of the negative electrode material is 0.90 g/cm³ to 1.20 g/cm³, specifically, the tap density may be 0.90 g/cm³, 0.95 g/cm³, 1.00 g/cm³, 1.05 g/cm³, 1.10 g/cm³, 1.15 g/cm³ and 1.20 g/cm³, etc., and may of course be any other value within the range above, which is not limited here. Optionally, the median particle size of the negative electrode material is 0.95 g/cm³ to 1.10 g/cm³.

In some implementations, the specific surface area of the negative electrode material is 0.5 m²/g to 5.0 m²/g, specifically, the specific surface area of the negative electrode material may be 0.5 m²/g, 0.8 m²/g, 1.0 m²/g, 1.5 m²/g, 2.0 m²/g, 2.5 m²/g, 3.0 m²/g, 4.0 m²/g and 5.0 m²/g, etc., and may of course be any other value within the range above, which is not limited here. Controlling the specific surface area of the negative electrode material within the above range is beneficial to improving the initial efficiency and output characteristics of the negative electrode material. Optionally, the specific surface area of the negative electrode material is 0.8 m²/g to 3.0 m²/g.

In some implementations, the specific capacity of the negative electrode material is 330 mAh/g ~ 370mAh/g/g, specifically, the specific capacity of the negative electrode material may be 330 mAh/g, 340 mAh/g, 350 mAh/g, 360 mAh/g and 370 mAh/g, etc., and may of course be any other value within the range above, which is not limited here. Optionally, the specific capacity of the negative electrode material is 340 mAh/g to 360 mAh/g.

In some implementations, the powder compaction density of the negative electrode material is 1.50 g/cm³ to 2.10 g/cm³, specifically, the powder compaction density of the negative electrode material may be 1.50 g/cm³, 1.60 g/cm³, 1.70 g/cm³, 1.80 g/cm³, 1 .90 g/cm³, 2.0 g/cm³ and 2.1 g/cm³, etc., and may of course be any other value within the range above, which is not limited here. Optionally, the powder compaction density of the negative electrode material is 1.70 g/cm³ to 2.05 g/cm³.

In a third aspect, an embodiment of the present disclosure provides a negative electrode plate, which includes the negative electrode material provided in the above embodiments.

In some implementations, the negative electrode plate includes a current collector and a negative electrode active substance layer. The negative electrode active substance layer includes a negative electrode active substance, a conductive agent and a binder. The negative electrode active substance includes the above negative electrode material.

In some implementations, the current collector of the negative electrode plate may include at least one of copper foil, aluminum foil, nickel foil or fluorocarbon current collector. The binder of the negative electrode plate may include at least one of carboxymethyl cellulose (CMC), polyacrylic acid, polyvinylpyrrolidone, polyaniline, polyimide, polyamideimide, polysiloxane, polystyrene butadiene rubber, epoxy resin, polyester resin, polyurethane resin or polyfluorene. The conductive agent of the negative electrode plate may include at least one of conductive carbon black, Ketjen black, acetylene black, carbon nanotubes, VGCF (vapor grown carbon fiber) or graphene.

In a fourth aspect, the present disclosure provides a battery, which includes the negative electrode material provided in the above embodiments.

In terms of material types, the battery may be a lithium ion battery, a sodium ion battery, etc. In terms of encapsulation forms, the battery may be a button battery, a pouch battery, a square battery, etc.

In some implementations, the battery is a lithium ion battery, and the lithium ion battery includes a positive electrode plate, the above negative electrode plate and a separator arranged between the positive electrode plate and the negative electrode plate.

In some implementations, the positive electrode active substance layer may include a positive electrode active substance, a conductive agent, and a binder. AI foil may be used as the positive current collector, and similarly, other positive current collectors commonly used in the art may also be used.

The conductive agent of the positive electrode plate may include at least one of conductive carbon black, lamellar graphite, graphene or carbon nanotubes. The binder in the positive electrode plate may include at least one of polyvinylidene fluoride, vinylidene fluoride-hexafluoropropylene copolymer, styrene-acrylate copolymer, styrene-butadiene copolymer, polyamide, polyacrylonitrile, polyacrylate (ester), polyacrylic acid, polyacrylate (salt), sodium carboxymethyl cellulose, polyvinyl acetate, polyvinylpyrrolidone, polyvinylether, polymethylmethacrylate, polytetrafluoroethylene or polyhexafluoropropylene. The positive electrode active substance includes but is not limited to at least one of lithium cobaltate, lithium nickelate, lithium manganate, lithium nickel manganate, lithium nickel cobaltate, lithium iron phosphate, lithium nickel cobalt aluminate or lithium nickel cobalt manganate, and the above positive electrode active substances may be doped or coated.

In some implementations, the separator includes at least one of polyethylene, polypropylene, polyvinylidene fluoride, polyethylene terephthalate, polyimide or aramid. For example, the polyethylene includes at least one selected from high density polyethylene, low density polyethylene or ultra-high molecular weight polyethylene. The polyethylene and polypropylene are preferred, because they have a good effect on preventing short circuit and can improve the stability of the battery through turn-off effect. In some embodiments, the thickness of the separator is within the range of about 5 µm to 500 µm.

In some implementations, the lithium ion battery may further include an electrolyte. In some embodiments, the electrolyte includes but is not limited to at least two of dimethyl carbonate (DMC), methyl ethyl carbonate (EMC), diethyl carbonate (DEC), ethylene carbonate (EC), propylene carbonate (PC) and propyl propionate (PP). In addition, the electrolyte may additionally include at least one of vinylene carbonate (VC), fluoroethylene carbonate (FEC) or dinitrile compound as an electrolyte additive. In some embodiments, the electrolyte further includes a lithium salt.

The positive electrode plate, the separator and the negative electrode plate are wound or stacked in sequence to form an electrode piece, then the electrode piece is put into an aluminum-plastic film for example for encapsulation, then electrolyte is injected, and then after formation and encapsulation, a lithium ion battery is obtained. Then, a performance test and a cycle test for the prepared lithium ion battery are carried out.

Those skilled in the art will understand that the preparation method of lithium ion battery described above is only an embodiment. Other methods commonly used in the art can be adopted without departing from the contents disclosed in the present disclosure.

In a fifth aspect, the present disclosure provides an electrical apparatus, which includes the negative electrode material provided in the above embodiments.

In the present disclosure, the electrical apparatus can take many forms, such as mobile phones, portable devices, notebook computers, battery cars, electric cars, ships, spacecrafts, electric toys and power tools, etc. The spacecrafts include, for example, airplanes, rockets, space shuttles and spaceships, etc. The electric toys include, for example, fixed or mobile electric toys, such as game machines, electric car toys, electric ship toys and electric airplane toys, etc. The power tools include, for example, metal cutting power tools, grinding power tools, assembling power tools and railway power tools, such as electric drills, electric grinders, electric wrenches, electric screwdrivers, electric hammers, electric impact drills, concrete vibrators and electric planers.

The examples of the present disclosure will be further illustrated in a plurality of examples. The examples of the present disclosure are not limited to the follow specific examples. Within the scope of not changing the main claim, changes can be made for implementation appropriately.

In the following examples and comparative examples, both preheating treatment and graphitization treatment are carried out in a protective atmosphere.

In the following examples and comparative examples, the carbon content of coke raw materials is more than 99%, the carbon content of natural graphite is more than 95%, the ash content of all kinds of binders is less than 0.1%, and the coking value of heavy oil and tar is 10%.

### Example 1

(1) The petroleum coke raw material with D₅₀ of 8 µm were mechanically mixed with cassava powder and water in a horizontal ribbon mixer, the mass ratio of the petroleum coke raw material, the cassava powder and the water was 40:1:10, the rotational speed of the mechanical mixing was controlled at 200 r/min, and the time of the mechanical mixing was controlled at 30 min.
(2) The mixed material obtained in step (1) was molded by a four-column hydraulic press (the pressure was 10 MPa, the die aperture was ϕ250×500 mm, and the pressure holding time was 20 s) to obtain a precursor, and the mass of a single precursor was 25 g, and the bulk density was 1.01 g/cc.
(3) The precursor was dried in a dryer at 180°C for 8 h.
(4) The material obtained in step (3) was pre-carbonized at 1000°C in a roller kiln for 24 h.
(5) The pre-carbonized material obtained in step (4) was continuously fed to the inlet of the graphitization apparatus. The pre-carbonized material was moved from the inlet in the direction close to the high-temperature zone and was graphitized in the high-temperature zone. The power supply of the graphitization apparatus was controlled at 1000 KW and the blanking speed was controlled at 10 kg/min, so that the pre-carbonized material was heated to 3100°C in 4 h. After being kept at 3100°C for 3 h, it was cooled to about 200°C in 3 h. At the same time, the gas in the graphitization furnace was pumped out by the pumping device and treated by the desulfurization device, and the frequency of the fan was controlled at 14 Hz. After the graphitization treatment, the obtained material was continuously discharged from the outlet of the graphitization apparatus, and then pulverized by the turbine pulverizer, thus obtaining the graphite negative electrode material of the present disclosure.

### Example 2

(1) The needle coke raw material with D₅₀ of 8 µm were mechanically mixed with corn starch and water in a horizontal ribbon mixer, the mass ratio of the needle coke raw material, the corn starch and the water was 40:1:10, the rotational speed of the mechanical mixing was controlled at 200 r/min, and the time of the mechanical mixing was controlled at 30 min.
(2) The mixed material obtained in step (1) was molded by a ball press (the die aperture was ϕ50×40 mm, and the pressure holding time was 10 s) to obtain a precursor with a pressure of 10 MPa and a mass of a single precursor of 10 g. The bulk density was 1.03 g/cc.
(3) The precursor was dried in a dryer at 180°C for 8 h.
(4) The material obtained in step (3) was pre-carbonized at 1000°C in a roller kiln for 24 h.
(5) The pre-carbonized material obtained in step (4) was continuously fed to the inlet of the graphitization apparatus. The pre-carbonized material was moved from the inlet to the direction close to the high-temperature zone and was graphitized in the high-temperature zone. The power supply of the graphitization apparatus was controlled at 1000 KW and the blanking speed was controlled at 10 kg/min, so that the pre-carbonized material was heated to 3100°C in 4 h. After being kept at 3100°C for 3 h, it was cooled to about 200°C in 3 h. At the same time, the gas in the graphitization furnace was pumped out by the pumping device and treated by the desulfurization device, and the frequency of the fan was controlled at 14 Hz. After being continuously treated by the graphitization furnace and pulverized by a turbine pulverizer, the graphite negative electrode material of the present disclosure was obtained.

### Example 3

(1) The petroleum coke raw material with D₅₀ of 8 µm were mechanically mixed with corn starch and water in a horizontal ribbon mixer, the mass ratio of the petroleum coke raw material, the corn starch and the water was 40:1:10, the rotational speed of the mechanical mixing was controlled at 200 r/min, and the time of the mechanical mixing was controlled at 30 min.
(2) The mixed material obtained in step (1) was molded by a particle extruder (the die aperture was ϕ20×45 mm, and the pressure holding time was 10 s) to obtain a precursor with a pressure of 10 MPa and a mass of a single precursor of 8 g. The bulk density was 1.05 g/cc.
(3) The precursor was dried in a dryer at 180°C for 8 h.
(4) The material obtained in step (3) was pre-carbonized at 1000°C in a roller kiln for 24 h.
(5) The pre-carbonized material obtained in step (4) was continuously fed to the inlet of the graphitization apparatus. The pre-carbonized material was moved from the inlet to the direction close to the high-temperature zone and was graphitized in the high-temperature zone. The power supply of the graphitization apparatus was controlled at 1000 KW and the blanking speed was controlled at 10 kg/min, so that the pre-carbonized material was heated to 3100°C in 4 h. After being kept at 3100°C for 3 h, it was cooled to about 200°C in 3 h. At the same time, the gas in the graphitization furnace was pumped out by the pumping device and treated by the desulfurization device, and the frequency of the fan was controlled at 15 Hz. After being continuously treated by the graphitization furnace and pulverized by a turbine pulverizer, the graphite negative electrode material of the present disclosure was obtained.

### Example 4

(1) The petroleum coke raw material with D₅₀ of 8 µm were mechanically mixed with cassava powder and water in a horizontal ribbon mixer, the mass ratio of the petroleum coke raw material, the cassava powder and the water was 40:1.2:10, the rotational speed of the mechanical mixing was controlled at 200 r/min, and the time of the mechanical mixing was controlled at 30 min.
(2) The mixed material obtained in step (1) was molded by a twin-roll extruder (the die aperture was ϕ20×40 mm, and the pressure holding time was 10 s) to obtain a precursor with a pressure of 10 MPa and a mass of a single precursor of 6 g. The bulk density was 1.06 g/cc.
(3) The precursor was dried in a dryer at 180°C for 8 h.
(4) The material obtained in step (3) was pre-carbonized at 1000°C in a roller kiln for 24 h.
(5) The pre-carbonized material obtained in step (4) was continuously fed to the inlet of the graphitization apparatus. The pre-carbonized material was moved from the inlet to the direction close to the high-temperature zone and was graphitized in the high-temperature zone. The power supply of the graphitization apparatus was controlled at 900 KW and the blanking speed was controlled at 8 kg/min, so that the pre-carbonized material was heated to 3100°C in 4 h. After being kept at 3100°C for 3 h, it was cooled to about 200°C in 3 h.

At the same time, the gas in the graphitization furnace was pumped out by the pumping device and treated by the desulfurization device, and the frequency of the fan was controlled at 15 Hz. After being continuously treated by the graphitization furnace and pulverized by a turbine pulverizer, the graphite negative electrode material of the present disclosure was obtained.

### Example 5

(1) The flake graphite with D₅₀ of 8 µm was mechanically mixed with cassava powder and water in a horizontal ribbon mixer, and the mass ratio of the flake graphite, the cassava powder and the water was controlled at 40:1:10, the rotational speed of the mechanical mixing was controlled at 200 r/min, and the time of the mechanical mixing was controlled at 30 min.
(2) The mixed material obtained in step (1) was molded by a screw extruder (the die aperture was ϕ15×40 mm, and the pressure holding time was 10 s) to obtain a precursor with a pressure of 10 MPa and a mass of a single precursor of 6 g. The bulk density was 1.14 g/cc.
(3) The precursor was dried in a dryer at 180°C for 8 h.
(4) The material obtained in step (3) was pre-carbonized at 1000°C in a roller kiln for 24 h.
(5) The pre-carbonized material obtained in step (4) was continuously fed to the inlet of the graphitization apparatus. The pre-carbonized material was moved from the inlet to the direction close to the high-temperature zone and was graphitized in the high-temperature zone. The power supply of the graphitization apparatus was controlled at 1000 KW and the blanking speed was controlled at 10 kg/min, so that the pre-carbonized material was heated to 3100°C in 4 h. After being kept at 3100°C for 3 h, it was cooled to about 200°C in 3 h. At the same time, the gas in the graphitization furnace was pumped out by the pumping device and treated by the desulfurization device, and the frequency of the fan was controlled at 14 Hz. After being continuously treated by the graphitization furnace and pulverized by a turbine pulverizer, the graphite negative electrode material of the present disclosure was obtained.

### Example 6

Different from Example 1, the holding temperature in step (5) was 2600°C.

### Example 7

Different from Example 1, the holding temperature in step (5) was 2800°C.

### Example 8

Different from Example 1, the holding temperature in step (5) was 3300°C.

### Example 9

Different from Example 1, the holding temperature in step (5) was 3500°C.

### Example 10

Different from Example 1, the holding time in step (5) was 1.5 h.

### Example 11

Different from Example 1, the holding time in step (5) was 2 h.

### Example 12

Different from Example 1, the holding time in step (5) was 4 h.

### Example 13

Different from Example 1, the holding time in step (5) was 4.5 h.

### Example 14

Different from Example 1, the molding pressure in step (2) was 4 MPa, and the bulk density of the obtained precursor was 0.72 g/cc.

### Example 15

Different from Example 1, the molding pressure in step (2) was 5 MPa, and the bulk density of the obtained precursor was 0.87 g/cc.

### Example 16

Different from Example 1, the molding pressure in step (2) was 30 MPa, and the bulk density of the obtained precursor was 1.02 g/cc.

### Example 17

Different from Example 1, the molding pressure in step (2) was 50 MPa, and the bulk density of the obtained precursor was 1.10 g/cc.

### Example 18

Different from Example 1, the molding pressure in step (2) was 100 MPa, and the bulk density of the obtained precursor was 1.12 g/cc.

### Example 19

Different from Example 1, the molding pressure in step (2) was 110 MPa, and the bulk density of the obtained precursor was 1.23 g/cc.

### Example 20

Different from Example 1, the mass ratio of the powder raw material, the binder and the solvent in step (1) was 9: 1: 4.

### Example 21

Different from Example 1, the mass ratio of the powder raw material, the binder and the solvent in step (1) was 10: 1: 5.

### Example 22

Different from Example 1, the mass ratio of the powder raw material, the binder and the solvent in step (1) was 100: 1: 60.

### Example 23

Different from Example 1, the mass ratio of the powder raw material, the binder and the solvent in step (1) was 105: 1: 63.

### Example 24

Different from Example 1, in step (1), petroleum coke raw material with D₅₀ of 8 µm was directly used for molding treatment by a four-column hydraulic press.

### Example 25

Different from Example 1, the median particle size D50 of the petroleum coke raw material was 3 µm.

### Example 26

Different from Example 1, the median particle size D50 of the petroleum coke raw material was 5 µm.

### Example 27

Different from Example 1, the median particle size D50 of the petroleum coke raw material was 15 µm.

### Example 28

Different from Example 1, the median particle size D50 of the petroleum coke raw material was 25 µm.

### Example 29

Different from Example 1, the median particle size D50 of the petroleum coke raw material was 28 µm.

### Comparative Example 1

The petroleum coke raw material powder was directly put into the graphite crucible first, and then the graphite crucible was transferred to an Acheson furnace, and the negative electrode material was obtained by graphitization (the highest temperature was 3100°C, and the highest temperature was kept for 3 h).

### Comparative Example 2

Different from Example 1, in step (5), the fourth precursor was put into an Acheson furnace for graphitization treatment (the highest temperature was 3100°C, and the highest temperature was kept for 3 h), and the feed back was pulverized by a turbine pulverizer to obtain a negative electrode material.

### Comparative Example 3

Different from Example 5, in step (5), the fourth precursor was put into an Acheson furnace for graphitization treatment (the highest temperature was 3100°C, and the highest temperature was kept for 3 h), and the feed back was pulverized by a turbine pulverizer to obtain a negative electrode material.

### Performance test:

The samples of negative electrode materials prepared in Examples 1 to 29 and Comparative Examples 1 to 3, conductive carbon black and PVDF with the mass ratio of 91.6:1.8:6.6 were magnetically stirred in N-methylpyrrolidone solution (NMP, AR) for 8 h to make them evenly mixed. The mixed slurry was coated on the copper foil, dried in vacuum at 60°C and used as the working electrode. Metal lithium was used as the counter electrode and the reference electrode, the separator was Celgard2325, and the electrolyte was 1 mol·L⁻¹ of LiPF₆-EC (ethylene carbonate) /DMC (dimethyl carbonate) /EMC (methyl ethyl carbonate) (with the volume ratio of 1:1:1). The assembly of CR2016 button cell was completed in a glove box filled with high-purity argon, and four batteries were prepared for each group of samples.

### (1) Material testing:

a. The specific surface area of the material was tested by a fully automatic specific surface area and porosity analyzer Tristar3000 of Micromeritics Instrument Corporation, USA.
b. The particle sizes (D10, D50 and D90) of the negative electrode materials and the particle size (D50) of the raw materials particles were tested by a Malvern laser particle size tester MS3000.
c. The structure of the materials was tested by an X-ray diffractometer of Rigaku, Japan, to obtain the graphitization degree and orientation index of the negative electrode materials.
d. The surface microstructure morphology of the samples was observed by a VEGA3 scanning electron microscope of TESCAN Corporation.
e. According to the method in the GB/T 24533-2019 *Graphite negative electrode materials for lithium ion battery,* the tap density of the material was tested by a Conta tap density tester.
f. The powder compaction density of the materials under 5T pressure was tested by a CARVER compaction density instrument.

### (2) Electrochemical performance test:

The first discharge capacity/first discharge efficiency test was conducted on the LAND battery tester, and the charging and discharging condition was as follows:
1) the batteries were discharged to 5 mV at 0.1 C, and discharged to 0.001 V at 0.09 C, 0.08 C...0.02 C, and then charged to 1.5 V at 0.1 C, and the cycle was repeated twice;
2) the first discharge capacity and the first discharge efficiency of each of the four batteries were converted and output according to the weight of the active substance; 3) the average value of the four batteries was calculated as the output of the final first discharge capacity and first discharge efficiency.

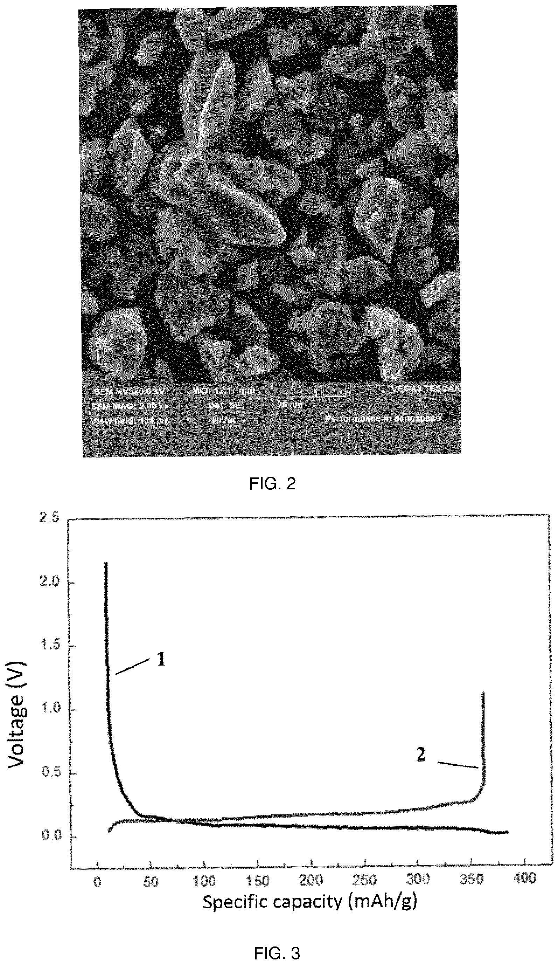

The SEM image of the negative electrode material provided in Example 1 is shown in FIG. 2.

According to FIG. 2, it can be seen that the negative electrode material prepared by the example of the present disclosure has a smooth surface and a good morphology.

The first charge-discharge curve of the button battery made of the negative electrode material provided in Example 1 is shown in FIG. 3.

Curve 1 in FIG. 3 is a discharge curve, and curve 2 in FIG. 3 is a charge curve. According to FIG. 3, it can be seen that the battery made of the negative electrode material prepared by the example of the present disclosure has higher specific charge-discharge capacity and higher first efficiency.

The test data of Examples 1 to 29 and Comparative Examples 1 to 3 are shown in Table 1 below:

**Table 1. Test Data of Examples 1 to 29 and Comparative Examples 1 to 3**

| | D10 of negative electrode material (µm) | D50 of negative electrode material (µm) | D90 of negative electrode material (µm) | Tap density T1 (g/cc) of powder raw material | Tap density T2 (g/cc) of precursor | ΔT =T1-T2 | Tap density of negative electrode material (g/cc) | Powder compaction density of negative electrode material (g/cm³) | Specific surface area of negative electrode material (m2/g) | Capacity of negative electrode material (mAh/g) | First efficiency (%) | Graphitization degree (%) | OI (I₀₀₄/I₁₁₀) |
|---|---|---|---|---|---|---|---|---|---|---|---|---|---|
| Example 1 | 7.5 | 16 | 30 | 0.66 | 0.65 | 0.01 | 1.14 | 1.85 | 1.82 | 350.6 | 94.5 | 94.1 | 1.54 |
| Example 2 | 7.6 | 15.5 | 29.5 | 0.69 | 0.67 | 0.02 | 1.06 | 1.97 | 1.65 | 355.7 | 94.2 | 94.6 | 1.89 |
| Example 3 | 7.8 | 16 | 29.8 | 0.658 | 0.64 | 0.018 | 1.12 | 1.86 | 1.79 | 350.3 | 94.5 | 94.2 | 1.49 |
| Example 4 | 7.6 | 15.5 | 29.4 | 0.64 | 0.63 | 0.01 | 1.10 | 1.83 | 1.78 | 349.4 | 94.4 | 94.0 | 1.53 |
| Example 5 | 8 | 16.5 | 30 | 0.849 | 0.83 | 0.019 | 1.05 | 2.05 | 1.96 | 364.5 | 94.0 | 95.5 | 1.55 |
| Example 6 | 7.8 | 16.3 | 31.5 | 0.69 | 0.68 | 0.01 | 0.98 | 1.75 | 2.21 | 337.5 | 93.5 | 89.2 | 2.02 |
| Example 7 | 7.9 | 16.2 | 30.6 | 0.63 | 0.60 | 0.02 | 1.01 | 1.78 | 2.17 | 342.6 | 93.8 | 92.1 | 1.95 |
| Example 8 | 7.7 | 16.1 | 30.8 | 0.65 | 0.63 | 0.02 | 1.13 | 1.87 | 1.76 | 351.2 | 94.5 | 94.5 | 1.59 |
| Example 9 | 7.3 | 16.3 | 31.1 | 0.655 | 0.64 | 0.015 | 1.14 | 1.88 | 1.82 | 351.3 | 94.4 | 94.5 | 1.63 |
| Example 10 | 7.6 | 16.7 | 30.4 | 0.63 | 0.62 | 0.01 | 1.10 | 1.79 | 1.87 | 343.6 | 93.9 | 92.6 | 1.86 |
| Example 11 | 7.8 | 16.5 | 30.6 | 0.65 | 0.64 | 0.01 | 1.12 | 1.82 | 1.75 | 347.6 | 94.1 | 93.5 | 1.76 |
| Example 12 | 7.9 | 16.7 | 30.8 | 0.672 | 0.65 | 0.022 | 1.15 | 1.87 | 1.91 | 350.8 | 94.4 | 94.2 | 1.64 |
| Example 13 | 7.6 | 16.6 | 30.2 | 0.66 | 0.642 | 0.018 | 1.14 | 1.88 | 1.96 | 350.9 | 94.5 | 94.3 | 1.78 |
| Example 14 | 7.9 | 16.3 | 31.2 | 0.71 | 0.69 | 0.02 | 1.17 | 1.86 | 1.59 | 350.8 | 94.0 | 93.9 | 1.67 |
| Example 15 | 7.8 | 16.1 | 30.9 | 0.702 | 0.69 | 0.012 | 1.17 | 1.87 | 1.63 | 350.5 | 94.6 | 94.3 | 1.46 |
| Example 16 | 7.5 | 16.1 | 30.6 | 0.678 | 0.66 | 0.018 | 1.12 | 1.87 | 1.72 | 350.6 | 94.5 | 94.3 | 1.43 |
| Example 17 | 7.3 | 16.5 | 31.5 | 0.64 | 0.62 | 0.02 | 1.10 | 1.86 | 1.86 | 351.2 | 94.4 | 94.3 | 1.40 |
| Example 18 | 7.2 | 16.7 | 32.1 | 0.635 | 0.62 | 0.015 | 1.09 | 1.86 | 1.89 | 351.4 | 94.3 | 94.4 | 1.39 |
| Example 19 | 7.0 | 16.7 | 32.4 | 0.63 | 0.61 | 0.02 | 1.08 | 1.87 | 1.39 | 351.0 | 94.3 | 94.4 | 1.65 |
| Example 20 | 7.1 | 17.1 | 33.2 | 0.615 | 0.61 | 0.005 | 1.11 | 1.86 | 1.62 | 350.1 | 94.1 | 94.1 | 1.69 |
| Example 21 | 7.0 | 16.9 | 32.9 | 0.64 | 0.62 | 0.02 | 1.14 | 1.87 | 1.89 | 350.2 | 94.5 | 94.2 | 1.41 |
| Example 22 | 7.8 | 16.1 | 30.1 | 0.62 | 0.60 | 0.02 | 1.14 | 1.87 | 1.91 | 350.6 | 94.6 | 94.3 | 1.38 |
| Example 23 | 7.9 | 16.2 | 30.2 | 0.71 | 0.69 | 0.02 | 1.12 | 1.84 | 1.64 | 350.7 | 94.1 | 94.1 | 1.67 |
| Example 24 | 7.6 | 15.8 | 30.5 | 0.63 | 0.61 | 0.02 | 1.11 | 1.84 | 1.58 | 349.2 | 94.6 | 93.8 | 1.87 |
| Example 25 | 3.7 | 8.6 | 15.5 | 0.52 | 0.51 | 0.01 | 0.92 | 1.72 | 2.87 | 336.2 | 93.2 | 93.2 | 1.82 |
| Example 26 | 4.9 | 11.2 | 21.8 | 0.58 | 0.56 | 0.02 | 0.95 | 1.75 | 2.46 | 339.6 | 93.6 | 94.6 | 1.46 |
| Example 27 | 14.5 | 30.4 | 62.6 | 0.71 | 0.70 | 0.01 | 1.02 | 1.80 | 1.53 | 351.3 | 94.6 | 94.5 | 1.46 |
| Example 28 | 19.7 | 45.6 | 96.2 | 0.70 | 0.68 | 0.02 | 1.13 | 1.91 | 1.54 | 351.4 | 94.7 | 94.5 | 1.42 |
| Example 29 | 22.6 | 48.7 | 101.4 | 0.715 | 0.700 | 0.015 | 1.14 | 1.93 | 1.57 | 351.7 | 94.6 | 93.6 | 1.79 |
| Comparative Example 1 | 4.2 | 8.1 | 16.3 | 0.76 | 0.71 | 0.05 | 1.13 | 1.87 | 2.25 | 351.4 | 94.7 | 94.8 | 3.28 |
| Comparative Example 2 | 7.9 | 16.2 | 30.2 | 0.71 | 0.65 | 0.06 | 1.14 | 1.85 | 1.76 | 350.4 | 94.5 | 94.2 | 3.14 |
| Comparative Example 3 | 8.2 | 16.8 | 30.8 | 0.64 | 0.58 | 0.06 | 1.06 | 2.04 | 1.92 | 364.1 | 94.2 | 95.3 | 3.38 |

It can be seen from Table 1 that there is little difference between the powder tap density T1 of the powder raw material and the precursor powder tap density T2 of the negative electrode materials prepared in Examples 1 to 29 of the present disclosure, which indicates that the precursor after the molding treatment of the present disclosure has recoverability, and the preparation method of the present disclosure does not damage the powder morphology of the materials. Specifically, in the present disclosure, the powder raw material is coated in the liquid phase and molded, and the powder is converted into particles or blocks and then pre-carbonized, so as to achieve the purpose of conveying materials by a pipeline. After pre-carbonization, the binder can form a bridge between particles to achieve the function of secondary granulation. Finally, after continuous graphitization treatment at 2800°C to 3500 °C, the obtained material particles have a good morphology, a high tap density and excellent processability. Since the graphitization process in the present disclosure is a continuous operation, the temperature and time of all materials passing through the high-temperature zone are the same, and there is no problem of uneven heating or temperature gradient, so that the prepared negative electrode material has the advantages of good product consistency, high capacity, high purity and low cost, and can meet the requirements of high-end power or 3C lithium battery products.

In Examples 6 to 9, the graphitization temperature is too low (Example 6), which leads to poor graphitization degree and poor capacity performance of the negative electrode material, high orientation index (OI) value, and poor isotropic properties of the material, and the tap density and powder compaction density of the negative electrode material also decrease to some extent.

In Examples 10 to 13 in which the negative electrode materials are prepared, the time of the graphitization treatment is too short (Example 10), which leads to poor graphitization degree and poor capacity performance, high orientation index (OI) value, and poor isotropic properties of the materials, and the tap density and powder compaction density of the negative electrode materials also decrease to some extent. If the time of graphitization treatment is too long (Example 13), the performance indexes such as tap density, powder compaction density, graphitization degree, capacity performance and orientation index of the material are no longer effectively improved, but even decrease.

In Examples 14 to 19 in which the negative electrode materials are prepared, the molding pressure is too low (Example 14), which leads to the decrease of the strength of the particles and blocks, resulting in slightly poor first efficiency and graphitization degree of the negative electrode materials; or the molding pressure is too high (Example 19), the bulk density of the negative electrode material is too high and the specific surface area is too small, which is not beneficial to the recovery of the powder morphology of the negative electrode material, and the tap density of the negative electrode material also decreases to some extent.

In Examples 20 to 23 in which the negative electrode materials are prepared, both the mass ratio of the powder raw material to the binder and the mass ratio of the solvent to the binder are too small (Example 20), and the specific surface area is small, which is not beneficial to the recovery of powder morphology of negative electrode materials, and the orientation index is high; or the mass ratio of the powder raw material to the binder and the mass ratio of the solvent to the binder are too large (Example 23), and the specific surface area is small, which is not beneficial to the recovery of powder morphology of negative electrode material, and the orientation index is high.

In Example 24 in which the negative electrode materials are prepared, petroleum coke raw material is directly used for molding treatment without adding binder and solvent, resulting in a small specific surface area of the negative electrode material, which is not beneficial to the recovery of the powder morphology of the negative electrode material. Moreover, the orientation index is high, and the isotropic property of the materials is poor.

In Examples 25 to 28 in which the negative electrode materials are prepared, the D50 of the powder raw material is too small (Example 25), which leads to poor capacity performance of the material and high orientation index, and the tap density and powder compaction density of the negative electrode material also decrease to some extent; or the D50 of the powder raw material is too large (Example 28), and the performance indexes such as capacity performance and orientation index of the material are no longer effectively improved.

The tap density, specific surface area, first reversible capacity, graphitization degree and other indexes of the negative electrode materials prepared by the method described in Examples 1 to 5 of the present disclosure are all close to those in the Comparative Examples 1 to 3, while the OI values (I₀₀₄/I₁₁₀) in Examples 1 to 5 of the present disclosure are obviously smaller than those in the Comparative Examples 1 to 3, indicating that the negative electrode materials prepared by the preparation method in the present disclosure have better orientation.

Comparative Examples 2 and 3 are not subjected to continuous feeding, preheating and graphitization treatment in the graphitization apparatus, but are pulverized after graphitization in an Acheson furnace. The prepared negative electrode materials have obviously high OI value (I₀₀₄/I₁₁₀) and poor powder orientation, which is not beneficial to the intercalation and migration of lithium ions.

The above are only the preferred examples of the present disclosure, and are not intended to limit the present disclosure. For a person skilled in the art, various modifications and changes may be made to the present disclosure. Any modification, equivalent replacement, improvement, etc. made within the spirit and principles of the present disclosure shall fall within the scope of protection of the present disclosure.

Although the present disclosure has been disclosed by means of preferred examples, it is not intended to limit the claims. Any person skilled in the art may make some possible changes and modifications without departing from the concept of the present disclosure. Therefore, the scope of protection of the present disclosure shall be defined by the claims of the present disclosure.

## Claims

1. A preparation method of a negative electrode material, **characterized by** comprising following steps:
performing molding treatment on a powder raw material to obtain a precursor; and
continuously feeding the precursor to an inlet of a graphitization apparatus, wherein the precursor is moved from the inlet to a direction close to a high-temperature zone, undergoes preheating treatment and graphitization treatment successively, and then is continuously discharged from an outlet of the graphitization apparatus to obtain the negative electrode material.

2. The preparation method according to claim 1, wherein the preparation method comprises at least one of following technical features (1) to (8):
(1) the precursor can be pulverized and recovered into powder after the graphitization treatment, and a ratio of a median particle size of the pulverized and recovered powder to a median particle size of the powder raw material is 1: 1 to 4: 1;
(2) a movement mode of the precursor in the graphitization apparatus comprises at least one of rotation, rolling, spiral descending, vertical falling and horizontal moving;
(3) a movement mode of the precursor in the graphitization apparatus is self-rolling and spiral descending;
(4) a heating mode of the graphitization apparatus comprises at least one of arc heating, plasma heating and resistance heating;
(5) the graphitization apparatus is of a vertical structure;
(6) the graphitization apparatus further comprises a pumping device, and the pumping device is arranged on a furnace cover of the graphitization apparatus and is communicated with inside of the graphitization apparatus;
(7) the graphitization apparatus further comprises a pumping device, and a gravity of the precursor is greater than a suction force generated by the pumping device; and
(8) the graphitization apparatus further comprises a pumping device, and a frequency of a main fan of the pumping device is 10 Hz to 20 Hz.

3. The preparation method according to claim 1 or 2, wherein the preparation method comprises at least one of following technical features (1) to (6):
(1) the powder raw material comprises coke powder and/or graphite;
(2) the powder raw material comprises coke powder, and the coke powder comprises at least one of petroleum coke, pitch coke, needle coke, green coke, semi-calcined coke and calcined coke;
(3) the powder raw material comprises graphite, and the graphite comprises at least one of flake graphite, microcrystalline graphite and spherical graphite;
(4) a median particle size of the powder raw material is 5 µm to 25 µm;
(5) a carbon content of the powder raw material is more than 80%; and
(6) a volatile content of the powder raw material is less than 15%.

4. The preparation method according to any one of claims 1 to 3, wherein the preparation method comprises at least one of following technical features (1) to (8):
(1) a pressure of the molding treatment is 5 MPa to 100 MPa;
(2) a pressure holding time of the molding treatment is 10 s to 60 s;
(3) an average particle size of the precursor is 5 mm to 100 mm;
(4) a bulk density of the precursor is 0.8 g/cc to 1.2 g/cc;
(5) a mass of a single block of the precursor is 5 g to 100 g;
(6) a powder tap density of the powder raw material is T1, and a powder tap density of the precursor is T2, wherein T1-T2 is less than or equal to 0.03 g/cc; and
(7) an apparatus for the molding treatment comprises at least one of a block press, a four-column hydraulic press, a screw extruder, a twin-roll extruder, a pellet extruder and a ball press.

5. The preparation method according to any one of claims 1 to 4, further comprising a step of mixing the powder raw material with a binder and a solvent before the molding treatment.

6. The preparation method according to claim 5, wherein the preparation method comprises at least one of following technical features (1) to (14):
(1) the binder is converted into at least one of carbon and a graphite substance after the graphitization treatment;
(2) the binder comprises at least one of heavy oil, mineral oil, coal tar, asphalt, petroleum resin, phenolic resin, epoxy resin, coumarone resin, potato starch, wheat starch, corn starch, sweet potato starch, kudzu powder and cassava powder;
(3) the solvent can be completely volatilized after the graphitization treatment;
(4) the solvent comprises at least one of water, ethanol, acetone, benzene, toluene, quinoline, tetrahydrofuran and carbon tetrachloride;
(5) a mass ratio of the powder raw material, the binder and the solvent is (10 to 100): 1: (5 to 60);
(6) the mixing comprises mechanical mixing and/or mechanical fusion;
(7) the mixing comprises mechanical mixing, and a rotational speed of the mechanical mixing is 100 r/min to 500 r/min;
(8) the mixing comprises mechanical mixing, and a time of the mechanical mixing is 10 min to 100 min;
(9) the mixing comprises mechanical fusion, and a rotational speed of the mechanical fusion is 200 r/min to 1000 r/min;
(10) the mixing comprises mechanical fusion, and a time of the mechanical fusion is 10 min to 80 min;
(11) after the molding treatment and before the continuous feeding, a step of drying treatment is further comprised;
(12) after the molding treatment and before the continuous feeding, a step of drying treatment is further comprised, and an apparatus for the drying treatment comprises at least one of a tunnel dryer, a drum dryer, a mesh belt dryer and a box dryer;
(13) after the molding treatment and before the continuous feeding, a step of drying treatment is further comprised, and a temperature of the drying treatment is 100°C to 300°C; and
(14) after the molding treatment and before the continuous feeding, a step of drying treatment is further comprised, and a time of the drying treatment is 4 h to 20 h.

7. The preparation method according to any one of claims 1 to 6, wherein before the continuous feeding, the preparation method further comprises a step of performing pre-carbonization treatment on the precursor, and the preparation method comprises at least one of following technical features (1) to (6):
(1) an apparatus for the pre-carbonization treatment comprises at least one of a roller kiln, a pushed slab kiln, a mesh belt kiln, a high-sand kiln and a rotary kiln;
(2) a temperature of the pre-carbonization treatment is 700°C to 1500°C;
(3) a time of the pre-carbonization treatment is 10 h to 80 h;
(4) a heat holding time of a highest temperature experienced by the pre-carbonization treatment is more than 1 h;
(5) the pre-carbonization treatment is carried out in a first protective atmosphere for oxidation resistance;
(6) the pre-carbonization treatment is carried out in a first protective atmosphere for oxidation resistance, and the first protective atmosphere comprises at least one of nitrogen, argon, neon and xenon.

8. The preparation method according to any one of claims 1 to 7, wherein the preparation method comprises at least one of following technical features (1) to (5):
(1) the graphitization treatment is carried out in a second protective atmosphere for oxidation resistance;
(2) the graphitization treatment is carried out in a second protective atmosphere for oxidation resistance, and the second protective atmosphere comprises at least one of nitrogen, argon, neon and xenon;
(3) a power of the graphitization treatment is greater than or equal to 500 KW;
(4) a heat holding temperature of the graphitization treatment is 2800°C to 3500°C; and
(5) a heat holding time of the graphitization treatment is 2 h to 4 h.

9. A negative electrode material, **characterized by** comprising graphite, and the negative electrode material has at least one of following features (1) to (8):
(1) a value of an orientation index (OI) of the negative electrode material is 1.0 to 3.0;
(2) a median particle size of the negative electrode material is 10 µm to 20 µm;
(3) a tap density of the negative electrode material is 0.90 g/cm³ to 1.20 g/cm³;
(4) a specific surface area of the negative electrode material is 0.5 m²/g to 5.0 m²/g;
(5) a specific capacity of the negative electrode material is 330 mAh/g to 370 mAh/g;
(6) a powder compaction density of the negative electrode material is 1.50 g/cm³ to 2.10 g/cm³;
(7) a D10 of the negative electrode material is 5 µm to 10 µm;
(8) a D90 of the negative electrode material is 15 µm to 35 µm.

10. A negative electrode plate, **characterized by** comprising:
the negative electrode material prepared by the preparation method according to any one of claims 1 to 8;
or
the negative electrode material according to claim 9.

11. A battery, **characterized by** comprising the negative electrode material prepared by the preparation method according to any one of claims 1 to 8 or the negative electrode material according to claim 9.

12. An electrical apparatus, **characterized by** comprising the negative electrode material prepared by the preparation method according to any one of claims 1 to 8 or the negative electrode material according to claim 9.
